# EUROPÄISCHE PATENTSCHRIFT

(11) **EP 3 448 831 B1**
(45) Veröffentlichungstag und Bekanntmachung des Hinweises auf die Patenterteilung: **01.09.2021**
(21) Anmeldenummer: 17721094.5
(22) Anmeldetag: 27.04.2017
(51) Int. Cl.: C05F 11/02, C05G 3/00, C05C 3/00, C05F 11/08, C05F 17/971

(54) **VERFAHREN ZUR HERSTELLUNG EINES ORGANISCHEN DÜNGEMITTELS MIT HUMINSTOFFCHARAKTER**
METHOD FOR OBTAINING ORGANIC FERTILIZER WITH HUMIC CHARACTER
PROCEDE DE FABRICATION D'UN ENGRAIS ORGANIQUE AYANT DES CARACTERISTIQUES HUMIFERES

(30) Priorität: 28.04.2016 EP 16167503
(43) Veröffentlichungstag der Anmeldung: 06.03.2019
(73) Patentinhaber: Novihum Technologies GmbH, 44147 Dortmund (DE)
(72) Erfinder: NINNEMANN, Horst, 58730 Fröndenberg/Ruhr (DE); SORGE, Reinhard, 06809 Roitzsch (DE); LANGER, Peter, 49205 Hasbergen (DE)
(74) Vertreter: Lederer & Keller Patentanwälte Partnerschaft mbB
(86) Internationale Anmeldenummer: PCT/EP2017/060060
(87) Internationale Veröffentlichungsnummer: WO 2017/186852

(56) Entgegenhaltungen:
- WO-A1-00/37394
- DE-A1- 2 247 938
- DE-C- 859 742
- DE-C- 870 565

## Beschreibung

Die vorliegende Erfindung betrifft ein Verfahren zur Herstellung eines organischen Düngemittels mit Huminstoffcharakter.

Aufgrund ihrer chemischen Eigenschaften und ihrer Verfügbarkeit hat Braunkohle schon seit längerer Zeit Interesse als Ausgangsmaterial für die Herstellung von Stoffen bzw. Stoffgemischen mit Düngewirkung gefunden.

Die EP 1 144 342 offenbart ein Verfahren zur Herstellung eines organischen Düngemittels mit Huminstoffcharakter durch oxidierende und ammonisierende Behandlung von Braunkohle, welches dadurch gekennzeichnet ist, dass die Braunkohle in ein wässrigammoniakalisches Gemisch von Suspension und Lösung mit einem pH-Wert größer 9 bis 12 überführt und anschließend in einem Reaktor zunächst ohne Zufuhr von Sauerstoff oder Luft alkalisch aktiviert und dabei in einer bis zu 0,5 h regelbaren Zeit auf eine Oxidationstemperatur von unter 100°C gebracht wird, anschließend das Oxidationsgas bei einer Reaktionstemperatur unter 100°C und bei Luft der Sauerstoff als Oxidationsgas unter Normaldruck und bei Luft-/Sauerstoffgemischen als Oxidationsgas bei Normaldruck mit einem Sauerstoffpartialdruck im Bereich von 0,02 MPa bis <0,1 MPa in das Reaktionsgemisch jeweils nach dem Injektorprinzip eingespeist wird und schließlich die Zufuhr von Oxidationsgas geschlossen und die Reaktion abgebrochen und das Reaktionsgemisch ohne weitere Oxidationsgaszufuhr auf eine für die weitere Aufarbeitung notwendige Temperatur abgekühlt wird, wobei die Abkühlzeit weniger als 1 h beträgt, und das organische Düngemittels als Dispersion im wässrigen Milieu durch Eindicken oder Trocknen gewonnen wird, wobei ein C/N-Verhältnis von 9 bis 15 erhalten wird.

Ein Nachteil des Verfahrens der EP 1 144 342 besteht allerdings darin, dass die alkalische Aktivierung der Braunkohle mit der wässrigen Ammoniaklösung und die anschließende Oxidation in demselben Reaktionsgefäß, dem oben beschriebenen Reaktor, durchgeführt werden. Dies erfordert, dass das wässrige-ammoniakalische Braunkohlegemisch zunächst innerhalb einer bestimmten Zeit auf eine für die Oxidationsreaktion vorteilhafte Temperatur gebracht wird, und nach Abschluss der Oxidation wieder abgekühlt wird, um die weitere Verarbeitung zu ermöglichen. Dabei wird die Zufuhr des Oxidationsgases unterbrochen und die Reaktion somit abgebrochen.

Studien der Erfinder zur Optimierung des Verfahrens haben gezeigt, dass eine kontinuierliche Verfahrensführung, bei der die Ausgangsstoffe Braunkohle und wässrige Ammoniaklösung kontinuierlich in das Verfahren eingespeist werden und die Reaktion nicht unterbrochen werden muss, mit dem in der EP 1 144 342 beschriebenen Verfahrens nicht ohne weiteres möglich ist. Eine kontinuierliche Verfahrensführung hätte den Vorteil, dass das Produkt bei hohem Durchsatz der Ausgangsstoffe und geringem Energiebedarf hergestellt werden könnte.

Zudem hat das Verfahren der EP 1 144 342 den Nachteil, dass die Produkteigenschaften nur in begrenztem Rahmen modifiziert werden können. Die Produkteigenschaften werden beispielsweise auch beeinflusst durch die Effizienz der Oxidationsreaktion, welche ihrerseits beeinflusst wird durch die mittlere Partikelgröße der verwendeten Braunkohle. Besonders kleine Braunkohlepartikel haben eine größere Oberfläche und erhöhen damit die Angriffsfläche für die Oxidationsreaktion. In der EP 1 144 342 werden Braunkohlepartikel mit einer Größe von <0,4 mm eingesetzt. Dies umfasst einen breiten Bereich unterschiedlicher Größen. Eine weitere Zerkleinerung der Braunkohlepartikel erfolgt im Rahmen des Verfahrens der EP 1 144 342 nicht.

Die Verwendung von mittleren Partikelgrößen im Bereich von ≤ 10 µm mit einer relativ einheitlichen Partikelgrößenverteilung wäre vorteilhaft für die Steigerung der Effizienz der Oxidationsreaktion, und erlaubt eine leichtere Einstellung der Anteile unterschiedlich hydrolysierbarer Stickstoffbindungsformen im Produkt. Um derartige Partikelgrößen zu erhalten, muss kommerziell erhältlicher Braunkohle jedoch in der Regel zerkleinert werden. Diesbezüglich wäre es vorteilhaft, wenn solch eine Zerkleinerung im Rahmen eines kontinuierlichen Verfahrens zur Herstellung eines organischen Düngemittels mit Huminstoffcharakter durch oxidierende und ammonisierende Behandlung von Braunkohle durchgeführt werden könnte. Dies ist nicht ohne weiteres möglich mit dem Verfahren der EP 1 144 342.

WO 00/37394 beschreibt ein organisches Düngemittel mit Huminstoffcharakter, dessen Herstellungsverfahren und Verwendung. Das Verfahren ist nicht als kontinuierliches Verfahren ausgestaltet.

Die DE 2 247 938 beschreibt ein Verfahren zur Herstellung von organischen Stickstoffdüngemitteln mit einem Stickstoffgehalt im Endprodukt von mehr als 15%.

Die DE 859 742 offenbart ein Verfahren zur Herstellung von stickstoffhaltigen Düngemitteln, bei dem grobkörnige Steinkohle mit Salpetersäure oxidiert und dann mit Ammoniakwasser vermischt und getrocknet wird.

Die DE 870 565 offenbart ein Verfahren zur Herstellung von stickstoffreichen Humusdüngemitteln. Jüngere fossile Brennstoffe werden dabei mit Luft, Ammoniak und/oder ammoniakhaltigen Gasen bei hohem Druck und hoher Temperatur umgesetzt.

Die Aufgabe der vorliegenden Erfindung besteht demnach in der Bereitstellung eines effizienten Verfahrens zur Herstellung eines organischen Düngemittels mit Huminstoffcharakter durch oxidierende und ammonisierende Behandlung von Braunkohle, wobei das Verfahren einen hohen Durchsatz an Ausgangsstoffen bei geringem Energieaufwand sowie die gezielte Beeinflussung der Produkteigenschaften ermöglicht.

Diese Aufgabe wird erfindungsgemäß gelöst durch ein Verfahren zur Herstellung eines organischen Düngemittels mit Huminstoffcharakter durch oxidierende und ammonisierende Behandlung von Braunkohle, wobei das organische Düngemittel einen Stickstoffgehalt von bis zu 8 Gew.-%, bezogen auf das Trockengewicht des Düngemittels, und ein C/N-Verhältnis von 7 bis 15 aufweist, wobei das Verfahren dadurch gekennzeichnet ist, dass es als kontinuierliches Verfahren durchgeführt wird und die folgenden Schritte umfasst:
a) Zuführen von Braunkohlepartikeln und wässriger Ammoniaklösung sowie gegebenenfalls rückgeführtes Produkt von Schritt b) als Ausgangsstoffe in einen Dispergierkreislauf mit Dispergiervorrichtung, Rezirkulationsbehälter und Zirkulationspumpe, und Dispergieren der Ausgangsstoffe unter gleichzeitiger Zerkleinerung der Braunkohlepartikel bis eine Suspension aus Braunkohlepartikeln und wässriger Ammoniaklösung entsteht, welche dem Dispergierkreislauf entnommen und Schritt b) zugeführt wird;
b) Oxidieren der in Schritt a) erhaltenen Suspension in einem Oxidationsreaktor mit einem sauerstoffhaltigem Oxidationsmittel bei einer Temperatur von <100°C, wobei eine Produktsuspension entsteht, welche vollständig Schritt c) oder teilweise Schritt c) und teilweise Schritt a) als Ausgangsstoff zugeführt wird;
c) Trocknen der in Schritt b) erhaltenen Produktsuspension bei einer Temperatur >50°C bis auf einen Restfeuchtegehalt von maximal 30 Gew.-%, bezogen auf das Gesamtgewicht des getrockneten Produkts;
d) Abkühlen des in Schritt c) erhaltenen getrockneten Produkts.

Im Rahmen der Beschreibung der vorliegenden Erfindung können Schritt a) auch als "Dispergierschritt", Schritt b) auch als "Oxidationsschritt", Schritt c) auch als "Trocknungsschritt" und Schritt d) auch als "Abkühlungsschritt" bezeichnet werden.

Der Vorteil des erfindungsgemäßen Verfahrens gegenüber dem Verfahren der EP 1 144 342 besteht darin, dass der Prozess an keiner Stelle unterbrochen werden muss, sondern im kontinuierlichen Produktionsbetrieb über 24 h am Tag durchgeführt werden kann, was einen hohen Durchsatz der Ausgangsstoffe bei geringem Energiebedarf ermöglicht, und damit vorteilhaft für die Durchführung im industriellen Maßstab ist. Zudem kann in jedem Schritt direkt Einfluss auf die Produkteigenschaften, d.h. auf die StickstoffBindungsverhältnisse genommen werden, beispielsweise durch die Zerkleinerung der Braunkohlpartikel im Rahmen des Dispergierschritts a), welche die Oxidationsreaktion in Schritt b) beeinflusst und begünstigt, und damit letzten Endes die StickstoffBindungsverhältnisse im Produkt bestimmt; oder durch die Einstellung der Temperatur und Dauer der Trocknung in Schritt c); oder durch die Möglichkeit der Zusetzung weiterer Gase, wie beispielsweise CO₂, in jedem einzelnen Verfahrensschritt Schließlich kann die Verfahrensführung so erfolgen, dass die Oxidation der Braunkohlepartikel bereits mit dem ersten Verfahrensschritt beginnt und bis zum Abkühlen des Produkts in Schritt d) fortschreitet, was ebenfalls wirtschaftlich vorteilhaft ist. Schließlich erlaubt das erfindungsgemäße Verfahren die einfache Skalierung der Produktumsetzung, was mit den Verfahren des Standes der Technik so nicht möglich ist.

Der Begriff "Huminstoffcharakter" ist ein Fachbegriff, der dem Fachmann bekannt ist. Nach dem Wortlaut ist darunter zu verstehen, dass ein Produkt den Charakter von Huminstoffen hat. Zu den Huminstoffen gehören die Fulvosäuren, die Hymatomelansäuren, die Huminsäuren und die Humine (Fiedler, H.J. und Reissig, H.: "Lehrbuch der Bodenkunde", Gustav Fischer Verlag Jena, 1964, S. 174, Pkt. 4.423). In einer bevorzugten Ausführungsform der Erfindung ist der Begriff "Huminstoffcharakter" weiterhin so zu verstehen, dass das in dieser Weise bezeichnete organische Düngemittel zu einem Großteil aus Huminstoffen besteht. Zu einem Großteil in Bezug auf den Huminstoffanteil bedeutet vorliegend, dass die Huminstoffe den größten Gewichtsanteil des erfindungsgemäß hergestellten organischen Düngemittels, bezogen auf das Trockengewicht des Düngemittels, ausmachen. Beispielsweise ist darunter zu verstehen, dass die Huminstoffe > 50 Gew.-%, vorzugsweise > 60 Gew.-%, noch bevorzugter > 70 Gew.-%., und insbesondere bevorzugt > 80 Gew.-%, des erfindungsgemäß hergestellten organischen Düngemittels, bezogen auf das Trockengewicht des Düngemittels, ausmachen.

Eine "oxidierende und ammonisierende Behandlung" ist dem Fachmann ebenfalls bekannt. Diese erfolgt durch das hier beschriebene Verfahren. Häufig wird eine "oxidierende und ammonisierende Behandlung" auch als "oxidative Ammonolyse" bezeichnet. Die oxidative Ammonolyse wurde schon von Flaig, et.al. (1959) beispielsweise in "Umwandlung von Lignin in Huminsäuren bei der Verrottung von Weizenstroh" Chem.Ber.,92 8, 1973-1982 beschrieben.

Der Begriff "kontinuierliches Verfahren" ist im Rahmen der hier beschriebenen Erfindung derart zu verstehen, dass dem Verfahren kontinuierlich Ausgangsmaterialien, bei denen es sich vorliegend insbesondere um Braunkohle und wässrige Ammoniaklösung sowie gegebenenfalls rückgeführtes Produkt von Schritt b) handelt, zugeführt werden, welche über die Schritte a) bis d) in getrocknetes und abgekühltes Produkt überführt werden, ohne dass es zu einer Unterbrechung des Verfahrens bzw. der Verfahrensschritte kommen muss, um das Produkt zu bilden und es dem Prozess zu entziehen.

Der Begriff "Dispergierkreislauf", wie hierein verwendet, bezeichnet eine Anordnung, welche Dispergiervorrichtung, Rezirkulationsbehälter und Zirkulationspumpe umfasst. Dabei ist ebenfalls umfasst, dass die Dispergiervorrichtung und die Zirkulationspumpe in einem Aggregat angeordnet sind.

Dem Dispergierkreislauf in Verfahrensschritt a) werden dabei kontinuierlich so viel Ausgangsstoffe zugeführt wie Suspensionsprodukt entnommen und Schritt b) zugeführt wird, sodass das Stoffvolumen im Dispergierkreislauf im Wesentlichen konstant bleibt. Ebenso wird dem Oxidationsreaktor in Schritt b) kontinuierlich so viel der in Schritt a) erhaltenen Suspension zugeführt, wie an oxidierter Produktsuspension entnommen wird und vollständig Schritt c) oder teilweise Schritt c) und teilweise Schritt a) als Ausgangsstoff zugeführt wird.

Der Begriff "Suspension" oder "Braunkohle-Suspension", wie hierin verwendet, bezeichnet eine Suspension aus Braunkohlepartikeln und wässriger Ammoniaklösung, welche, wie hierin beschrieben, erhalten wird durch Dispergieren bzw. Mischen von Braunkohlepartikeln und wässriger Ammoniaklösung sowie gegebenenfalls rückgeführtes Produkt von Schritt b) in der Dispergiervorrichtung. Der Begriff "Suspension", wie hierin verwendet, umfasst auch, dass ein Teil der Braunkohle in Lösung geht, es sich bei der Suspension, wie hierin beschrieben, also um eine Mischung aus Braunkohle-Suspension und Braunkohle-Lösung in wässrigem Ammoniak handelt. Die Mischung stellt ein kolloid-disperses System dar. Der Begriff "mittlere Verweilzeit", wie im Rahmen der Beschreibung des erfindungsgemäßen Verfahrens verwendet, bezeichnet eine Zeitspanne, in der ein bestimmtes Ergebnis erzielt wird, beispielsweise die Bildung der Suspension in Schritt a) oder die Oxidation der Suspension in Schritt b), die Trocknung des Oxidationsprodukts in Schritt c), die Abkühlung des getrockneten Produkts in Schritt d) oder die Bildung des finalen Verfahrensprodukts beginnend mit der Herstellung der Suspension aus Braunkohlepartikeln und wässriger Ammoniaklösung in Schritt a) bis zum Erhalt des abgekühlten Produkts in Schritt d). Der Begriff impliziert im Rahmen des erfindungsgemäßen Verfahrens nicht, dass es nach oder innerhalb einer solchen Zeitspanne zu einer Unterbrechung des Verfahrens bzw. eines Verfahrensschrittes kommt.

Die Abkürzung "Gew.-%", wie hierin verwendet, steht für "Gewichtsprozent" und bezeichnet das Gewicht eines Anteils bezogen auf ein Gesamtgewicht. Um welchen Anteil es sich handelt, und auf welches Gesamtgewicht dieser bezogen ist, wird im Rahmen der vorliegenden Beschreibung der Erfindung an entsprechender Stelle jeweils angegeben.

Bei dem abgekühlten Produkt, welches in Schritt d) erhalten wird, handelt es sich um ein "Düngemittel mit Huminstoffcharakter". Ein Düngemittel mit Huminstoffcharakter ist z.B. ein Stoff bzw. ein Stoffgemisch mit Düngewirkung für Pflanzen und Boden, welches einen Stickstoffgehalt von bis zu 8 Gew.-%, bezogen auf das Trockengewicht des Düngemittels, und ein C/N-Verhältnis von 7 bis 15 aufweist.

Die wässrige Ammoniaklösung, welche in Schritt a) verwendet wird, wird gewonnen durch Lösen von Ammoniak in Wasser. Die wässrige Ammoniaklösung bzw. deren Ausgangsstoffe Wasser und Ammoniak können auch aus dem Reaktionsprozess, insbesondere aus den Schritten b) und Schritt c), zurückgewonnen und dem Verfahren wieder zur Verfügung gestellt werden, was zur Wirtschaftlichkeit des Verfahrens beiträgt. Die wässrige Ammoniaklösung weist vorzugsweise eine Konzentration von bis zu 10 Gew.-%, wobei die Konzentration vorzugsweise mindestens 2 Gew.-% beträgt, jeweils bezogen auf das Gesamtgewicht der wässrigen Ammoniaklösung. Bevorzugter ist eine Konzentration von 3 bis 8 Gew.-%, und insbesondere bevorzugt ist eine Konzentration von 4 bis 6 Gew.-%, jeweils bezogen auf das Gesamtgewicht der wässrigen Ammoniaklösung auf.

Der pH-Wert der wässrigen Ammoniaklösung liegt vorzugsweise zwischen 9 und 12.

Das vorliegende Verfahren erlaubt die Verwendung von Braunkohleteilchen als Ausgangsprodukt, deren Größe keine entscheidende Rolle spielt, da während des Verfahrens eine Zerkleinerung der Braunkohleteilchen erfolgt. Aus praktischen Erwägungen heraus werden vorzugsweise im Rahmen des erfindungsgemäßen Verfahrens Braunkohlepartikel mit mittleren Partikelgrößen von >10 µm eingesetzt, wobei auch Braunkohlepartikel mit Partikelgrößen von z.B. bis zu 10 mm eingesetzt werden können. Stärker bevorzugt sind Braunkohlepartikel mit Partikelgrößen bis zu 5 mm, noch stärker bevorzugt bis zu 2 mm, noch stärker bevorzugt bis zu 1 mm, noch stärker bevorzugt bis zu 500 µm, insbesondere bevorzugt bis zu 100 µm. Bei den Braunkohlepartikeln handelt es sich vorzugsweise um Braunkohlestaub mit typischen mittleren Partikelgrößen im Bereich von >10 bis 600 µm, insbesondere im Bereich von 200 bis 300 µm, also um derzeit üblichen kommerziellen Braunkohlestaub. Im Rahmen des erfindungsgemäßen Verfahrens ist aber z.B. auch die Verwendung von Rohbraunkohle mit Partikelgrößen bis zu 10 mm möglich, wobei die Rohbraunkohle im Dispergierkreislauf, insbesondere in der Dispergiervorrichtung zerkleinert wird. Dies erweitert noch einmal das Anwendungsspektrum des erfindungsgemäßen Verfahrens. Ggf. können zu große Braunkohleteile vor Einspeisung in den Dispergierkreislauf beispielsweise durch Mahlen zerkleinert werden.

Es können Braunkohlen unterschiedlicher Standorte (Herkunft) als Ausgangsmaterial eingesetzt werden. Außerdem kann Braunkohle im Gemisch mit technischen Ligninen der Zellstoffindustrie sowie der Holzhydrolyse, Braunkohle im Gemisch mit Lignin sowie Lignocellulosematerial aus dem Steam Explosion-Aufschluss zur Faserherstellung und Braunkohle im Gemisch mit Lignocellulosematerial wie Holz und Rindepartikel verwendet werden. Besagte Gemische können in dem erfindungsgemäßen Verfahren vorgemischt eingesetzt werden oder durch Mischen der einzelnen Bestandteile und der wässrigen Ammoniaklösung in der Dispergiervorrichtung erhalten werden.

Bei der in Schritt a) verwendeten Dispergiervorrichtung handelt es sich gleichzeitig um eine Mischvorrichtung und eine Zerkleinerungsvorrichtung, wobei die Mischung aus Braunkohlepartikeln und wässriger Ammoniaklösung sowie gegebenenfalls rückgeführtes Produkt von Schritt b) unter gleichzeitiger Zerkleinerung der Braunkohlepartikel solange in der Dispergiervorrichtung gemischt wird, bis eine Suspension aus zerkleinerten Braunkohlepartikel und wässriger Ammoniaklösung entsteht. Durch das Zerkleinern der Braunkohlepartikel in der Dispergiervorrichtung können Braunkohlepartikel mit einer relativ einheitlichen Partikelgrößenverteilung erhalten werden, was die Bildung einer besonders homogenen Suspension ermöglicht, die in Schritt b) der Oxidation zugeführt wird.

Vorzugsweise werden die Braunkohlepartikel in der Dispergiervorrichtung auf eine mittlere Partikelgröße von ≤10 µm, stärker bevorzugt auf mittlere Partikelgrößen von <8 µm, noch stärker bevorzugt auf mittlere Partikelgrößen von <6 µm, und insbesondere auf mittlere Partikelgrößen <4 µm zerkleinert. Die Zerkleinerung der Braunkohlepartikel hat den Vorteil, dass die Reaktionsflächen deutlich vergrößert werden und die mittlere Größenverteilung relativ einheitlich ist, was die in Schritt b) durchgeführte Oxidationsreaktion begünstigt.

Bei der mittleren Partikelgröße handelt es sich im Rahmen des erfindungsgemäßen Verfahrens um die volumengemittelte Partikelgröße. Diese wird im Rahmen des vorliegenden Verfahrens mittels Laserbeugung bestimmt, sofern nichts anderes angegeben oder für den Fachmann offensichtlich ist. Bei der Laserbeugung werden Partikelgrößenverteilungen durch Messung der Winkelabhängigkeit der Intensität von gestreutem Licht eines Laserstrahls, der eine dispergierte Probe durchdringt, ermittelt. Die Partikelgröße wird als Durchmesser von volumengleichen Kugeln angegeben. Falls aus technischen Gründen eine Bestimmung der mittleren Partikelgröße mittels Laserbeugung nicht möglich ist, erfolgt die Bestimmung der Partikelgröße mikroskopisch über die Bestimmung des längsten Durchmessers und gegebenenfalls Mittelung der erhaltenen Werte.

Die Messung der volumengemittelten Partikelgröße kann im Rahmen der vorliegenden Erfindung nach folgender Methodik erfolgen.

Eine Probe der Braunkohle-Suspension (100 ml) wird dem Kreislaufsystem entnommen, für 15 min in einem Becherglas auf einem Magnetrührer gerührt und anschließend für 10 s im Ultraschall behandelt. Die Bestimmung der mittleren Partikelgröße in der so behandelten Probe durch Laserbeugung erfolgt beispielsweise mit einem LS200 der Fa. Beckmann Coulter.

Die Dispergiervorrichtung, welche in dem erfindungsgemäßen Verfahren zum Einsatz kommt, enthält mindestens eine Dispergierkammer sowie einen Flüssigkeitseinlass zum Einleiten einer wässrigen Ammoniaklösung sowie gegebenenfalls rückgeführtes Produkt von Schritt b) in die Dispergierkammer. Weiterhin enthält sie mindestens einen Stoffeinlass zum Einleiten der Braunkohlepartikel in die Dispergierkammer. Außerdem enthält sie mindestens einen Auslass zur Abfuhr der Mischung aus Braunkohlepartikeln und wässriger Ammoniaklösung aus der Dispergierkammer.

Die Zerkleinerung der Braunkohlepartikel erfolgt in der Dispergiervorrichtung vorzugsweise mittels eines Rotor-Stator-Zahnkranz-Systems, welches verschiedene Spaltgrößen aufweisen kann, sodass der Grad der Zerkleinerung durch Wahl des entsprechenden Rotor-Stator-Zahnkranz-Systems bestimmt werden kann. Derartige Systeme sind im Stand der Technik bekannt und kommerziell erhältlich.

Bei der Dispergiervorrichtung, welche in dem erfindungsgemäßen Verfahren zum Einsatz kommt, handelt es sich vorzugsweise um ein geschlossenes System, sodass ein Gasaustausch mit der Umgebung unterbunden ist.

Bei der Dispergiervorrichtung kann es sich beispielsweise um eines der Modelle MT-VP Serie handeln. Bei den Vorrichtungen der MT-VP Serie handelt es sich um Systeme, welche in der EP 1 674 151 A1 bzw. der EP 1 674 151 B1 beschrieben sind, die hierin ausdrücklich in Bezug genommen werden. Die Vorrichtungen der MT-VP Serie ermöglichen Durchsätze von 1000 l/h bis zu 70000 l/h. Die Braunkohlepartikel werden dabei mittels Unterdruck, wie näher in der EP 1 674 151 B1 beschrieben, in die Dispergierkammer gesaugt, wo sie mit wässriger Ammoniaklösung vermischt wird. Die Vorrichtungen der MT-VP Serie ermöglichen, dass pro Stunde 70 kg bis 3500 kg Braunkohlepartikel in die Dispergierkammer gesaugt werden können.

Alternativ zu den Vorrichtungen der MT-VP Serie können z.B. auch Vorrichtungen der Firma YTRON als Dispergiervorrichtung verwendet werden, beispielsweise eine Vorrichtung mit der Bezeichnung YTRON-ZC.

In der Dispergierkammer wird die Flüssigkeit in geeigneter Weise in Bewegung gesetzt, sodass eine Durchmischung von Braunkohlepartikel und wässriger Ammoniaklösung sowie gegebenenfalls rückgeführtem Produkt von Schritt b) bei gleichzeitiger Zerkleinerung der Braunkohlepartikel erfolgt. Die Dispergierkammer ist dabei so ausgelegt, dass die Strömungsverhältnisse in der Regel turbulent sind und eine Feinverteilung des Stoffes in der Flüssigkeit begünstigt wird. Im Zuge der intensiven Durchmischung findet eine intensive Benetzung der Braunkohlepartikel mit der wässrigen Ammoniaklösung statt. Dadurch ist insbesondere bei der Verwendung von Braunkohlestaub die Gefahr der Klumpenbildung nahezu ausgeschlossen. Vorzugsweise ist der Auslass der Dispergierkammer mit dem Flüssigkeitseinlass in einer Weise verbunden, die es erlaubt, die Flüssigkeit mehrmals durch die Dispergierkammer zu leiten. Durch diese Rezirkulation ist es möglich, die wässrige Ammoniaklösung sukzessive mit Braunkohlepartikeln aufzukonzentrieren und/oder eine besonders homogene Verteilung der Braunkohlepartikel in der wässrigen Ammoniaklösung zu erzielen.

Optional kann bereits in die Dispergiervorrichtung, insbesondere in die Dispergierkammer der Dispergiervorrichtung, und dann direkt in den Flüssigkeitsstrom, ein Oxidationsmittel, zugesetzt werden. Bei dem Oxidationsmittel kann es sich beispielsweise um ein Sauerstoff (O₂)-haltiges Gas, welches ausgewählt wird aus Sauerstoff, sauerstoffangereicherter Luft oder Luft, handeln. Ferner kann es sich bei dem Oxidationsmittel beispielsweise um Ozon oder Wasserstoffperoxid, vorzugsweise wässrige Wasserstoffperoxidlösung, handeln. Bevorzugt ist der Zusatz eines Sauerstoff(O₂)-haltigen Gases, insbesondere Luft.

Die Zirkulationspumpe des Dispergierkreislaufs pumpt die Mischung aus Braunkohlepartikel und wässriger Ammoniaklösung durch den Dispergierkreislauf. Wie bereits oben bemerkt, kann die Zirkulationspumpe bereits Teil der Dispergiervorrichtung sein. Die Zirkulationspumpe saugt dabei die Suspension aus dem Rezirkulationsbehälter und drückt sie in die Dispergiervorrichtung.

Nach dem Durchlaufen der Dispergiervorrichtung gelangt die Braunkohle-Suspension erneut in den Rezirkulationsbehälter. Aus diesem wird die in der Dispergiervorrichtung erhaltene Braunkohle-Suspension kontinuierlich dem Kreislauf entzogen und Schritt b) zur Verfügung gestellt. Zur Vermeidung von Sedimentation ist der Rezirkulationsbehälter vorzugsweise mit weiteren Rührern ausgestattet. Bei diesen Rührern kann es sich auch um Begasungsrührwerke handeln, welche den Zusatz von Gasen, beispielsweise Luft, Sauerstoff oder CO₂, ermöglichen.

Die intensive Vermischung von Braunkohlepartikel und wässriger Ammoniaklösung sowie gegebenenfalls rückgeführtem Produkt von Schritt b), die in Schritt a) erfolgt, ermöglicht, dass in Schritt a) z.B. bis zu 30 Gew.-% Braunkohlepartikel auf 70 Gew.-%der wässrigen Ammoniaklösung eingesetzt werden können, jeweils bezogen auf das Gesamtgewicht der Mischung aus Braunkohlepartikeln und wässriger Ammoniaklösung. Vorzugsweise werden mindestens 10 Gew.-% Braunkohlepartikel auf 90 Gew.-% der wässrigen Ammoniaklösung eingesetzt, stärker bevorzugt mindestens 12 Gew.-% Braunkohlepartikel auf 88 Gew.-% der wässrigen Ammoniaklösung, noch stärker bevorzugt mindestens 14 Gew.-% Braunkohlepartikel auf 86 Gew.-% der wässrigen Ammoniaklösung, noch stärker bevorzugt mindestens 16 Gew.-% Braunkohlepartikel auf 84 Gew.-% der wässrigen Ammoniaklösung, noch stärker bevorzugt 18 Gew.-% Braunkohlepartikel auf 82 Gew.-% der wässrigen Ammoniaklösung, noch stärker bevorzugt 20 Gew.-% Braunkohlepartikel auf 80 Gew.-% der wässrigen Ammoniaklösung, noch stärker bevorzugt 25 Gew.-% Braunkohlepartikel auf 75 Gew.-% der wässrigen Ammoniaklösung, jeweils bezogen auf das Gesamtgewicht der Mischung aus Braunkohlepartikeln und wässriger Ammoniaklösung.

Die mittlere Verweilzeit der Mischung aus Braunkohlepartikeln und wässriger Ammoniaklösung sowie gegebenenfalls rückgeführtem Produkt von Schritt b) in der Dispergiervorrichtung kann z.B. bis zu 6 h betragen. Dadurch findet eine intensive Benetzung und Zerkleinerung der Braunkohlepartikel statt. Vorzugsweise beträgt die mittlere Verweilzeit der Mischung aus Braunkohlepartikeln und wässriger Ammoniaklösung sowie gegebenenfalls rückgeführtem Produkt von Schritt b) in der Dispergiervorrichtung 30 bis 300 min, stärker bevorzugt 45 bis 240 min, insbesondere bevorzugt 60 bis 180 min, bevor die resultierende Suspension dem Dispergierkreislauf entnommen und Schritt b) zugeführt wird. Die mittlere Verweilzeit berechnet sich wie bei der kontinuierlichen Verfahrensführung üblich aus dem Gesamtvolumen der Dispergiervorrichtung und den zugeführten bzw. abgeführten Volumina (z.B. wäre bei einem Volumen der Dispergiervorrichtung von 100 I und einer Zu- bzw. Abfuhr von 25 l/h die mittlere Verweilzeit 4 h).

Die in Schritt a) erhaltene Braunkohle-Suspension wird in der Regel über den Rezirkulationsbehälter des Dispergierkreislaufs Schritt b) zugeführt. In Schritt b) wird die Suspension, welche in Schritt a) erhalten wurde, in einem Oxidationsreaktor mit einem sauerstoffhaltigen Oxidationsmittel bei einer Temperatur von <100°C versetzt.

Vorzugsweise liegt die Temperatur, bei der die in Schritt a) erhaltene Suspension im Oxidationsreaktor oxidiert wird, bei mindestens 50°C, stärker bevorzugt zwischen 60 und 90°C, insbesondere bevorzugt zwischen 70 und 80°C.

Bei dem in Schritt b) verwendeten sauerstoffhaltigen Oxidationsmittel handelt es sich vorzugsweise um ein Sauerstoff(O₂)-haltiges Gas, welches ausgewählt wird aus Sauerstoff, sauerstoffangereicherter Luft oder Luft. Alternativ kann es sich bei dem sauerstoffhaltigen Oxidationsmittel auch um Ozon oder Wasserstoffperoxid handeln. Vorzugsweise wird das sauerstoffhaltige Oxidationsmittel direkt in die Suspension eingeführt, beispielsweise im Falle eines gasförmigen Oxidationsmittels durch Eintragen des Gases in die Reaktionsmischung unter Überdruck, wie nachfolgend genauer beschrieben.

Wird als sauerstoffhaltiges Oxidationsmittel ein Gas verwendet, also beispielsweise Sauerstoff, sauerstoffangereicherte Luft, Luft oder Ozon, so wird dieses vorzugsweise mit einem Überdruck von bis zu 0,8 MPa (8 bar) mittels einer Gasdosierungsvorrichtung direkt in die Suspension eingetragen. "Überdruck" bedeutet im Rahmen der vorliegenden Erfindung, dass der Druck, mit dem das sauerstoffhaltige Oxidationsgas zugeführt wird, über Normaldruck liegt. Normaldruck entspricht einem Druck von 101325 Pa = 1,01325 bar. Demzufolge wird im Rahmen des erfindungsgemäßen Verfahrens das sauerstoffhaltige Gas mit einem Druck von >0,101325 MPa (>1,01325 bar) zugeführt, wobei das sauerstoffhaltige Gas mit einem Überdruck von bis zu 0,8 MPa (8 bar) zugeführt werden kann. Vorzugsweise wird das sauerstoffhaltige Gas mit einem Überdruck von mindestens 0,15 MPa (1,5 bar) zugeführt. Stärker bevorzugt ist ein Überdruck von 0,2 bis 0,8 MPa (2 bis 8 bar), noch stärker bevorzugt ein Überdruck von 0,3 bis 0,7 MPa (3 bis 7 bar) und insbesondere bevorzugt ein Überdruck von 0,4 bis 0,6 MPa (4 bis 6 bar).

Bei der Gasdosierungsvorrichtung kann es sich beispielsweise um eine Düsenlanze, einen Begasungsring oder ein Begasungsrührwerk handeln, welche sich in dem Reaktor befinden und mit der Suspension in Kontakt stehen bzw. in diese eintauchen. Vorzugsweise handelt es sich bei der Gasdosierungsvorrichtung ein Begasungsrührwerk, mit dem die Suspension gleichzeitig in dem Reaktor gerührt werden kann, was den Eintrag des sauerstoffhaltigen Oxidationsgases in die Suspension und damit die Oxidationsreaktion begünstigt.

Alternativ kann das sauerstoffhaltige Oxidationsmittel auch in Lösung zugesetzt werden, beispielsweise in Form einer wässrigen Wasserstoffperoxidlösung. Ferner können gasförmige Oxidationsmittel in Lösung, vorzugsweise in wässriger Lösung, zugesetzt werden.

Der Oxidationsreaktor arbeitet in der Regel auch unter Überdruck, der etwas geringer ist als der Druck, mit dem das sauerstoffhaltige Gas eingeführt wird (sofern ein solches eingeführt wird). Bevorzugt arbeitet der Oxidationsreaktor unter einem Druck von mehr als 0,101325 MPa (1,01325 bar) (Normaldruck) bis 0,7 MPa (7 bar), stärker bevorzugt bis 0,6 MPa (6 bar).

Weiterhin können im Rahmen des Oxidationsschritts b) Katalysatoren verwendet werden, welche die Aktivität des Oxidationsmittels erhöhen.

Vorzugsweise erfolgt die Oxidation in Schritt b) mit einem Sauerstoff(O₂)-haltigen Gas, welches aus Sauerstoff, sauerstoffangereicherter Luft oder Luft gewählt wird. Insbesondere bevorzugt ist die Oxidation mit (Druck)luft, was zur Wirtschaftlichkeit des Verfahrens beiträgt.

Die mittlere Verweilzeit der Suspension in dem Oxidationsreaktor beträgt vorzugsweise 15 bis 300 min, bevorzugter 30 bis 240 min, insbesondere bevorzugt 45 bis 120 min. Durch die Oxidation der aus Schritt a) erhaltenen Suspension in dieser Zeitspanne mit dem sauerstoffhaltigen Oxidationsmittel entsteht eine Suspension, welche das Oxidationsprodukt der aus Schritt a) erhaltenen Suspension umfasst. Die aus Schritt b) resultierende Suspension wird im Rahmen des erfindungsgemäßen Verfahrens als "Produktsuspension" bezeichnet, welche das Oxidationsprodukt enthält.

Die Durchmischung des Reaktionsgemisches im Oxidationsreaktor erfolgt durch Rühren des Reaktionsgemisches, beispielsweise durch ein bereits erwähntes Begasungsrührwerk, oder andere gängige Rühreinrichtungen in dem Oxidationsreaktor. Das Rühren der Reaktionsmischung sorgt für einen gleichmäßigen Fortschritt der Oxidationsreaktor und verhindert Sedimentierung im Oxidationsbehältnis.

Optional kann der in Schritt b) verwendete Oxidationsreaktor auch mit einem weiteren Dispergierkreislauf verbunden sein, in den die Braunkohle-Suspension geleitet, und von dort wieder in den Oxidationsreaktor rezirkuliert werden kann. Die zusätzliche Durchmischung und Zerkleinerung der Braunkohlepartikel in dem weiteren Dispergierkreislauf sorgt für eine zusätzliche Homogenisierung der Suspension, was wiederum die Oxidationsreaktion beeinflusst und begünstigt, wodurch letzten Endes weiter auf die StickstoffBindungsverhältnisse im Produkt Einfluss genommen werden kann. Bei diesem weiteren Dispergierkreislauf kann es sich um einen Dispergierkreislauf handeln, wie er vorstehend im Zusammenhang mit Schritt a) des erfindungsgemäßen Verfahrens beschrieben wurde, so dass auf eine erneute Erläuterung verzichtet werden kann.

Überschüssiges Gas (sauerstoffhaltiges Oxidationsgas und/oder Ammoniak) wird vorzugsweise direkt erneut der Suspension zugeführt. Überschüssiges Gas kann dem Reaktor auch geregelt genommen entnommen werden, und der Gasreinigung bzw. der Rückgewinnung von Ammoniak zugeführt werden. Der rückgewonnene Ammoniak kann zur Herstellung der wässrigen Ammoniaklösung, die in Schritt a) zum Einsatz kommt, verwendet werden. Diese Maßnahmen tragen zur Wirtschaftlichkeit des erfindungsgemäßen Verfahrens bei.

Wie bereits oben erläutert zeichnet sich Schritt b) dadurch aus, dass dem Reaktor kontinuierlich ein bestimmtes Volumen an Suspension aus Schritt a) zugeführt und kontinuierlich ein bestimmtes Volumen an Produktsuspension aus dem Reaktor abgeführt wird und entweder der Trocknung in Schritt c) zugeführt oder nochmals Schritt a) zur Verfügung gestellt wird. Da dem Reaktor damit kontinuierlich nicht oxidiertes Material, d.h. nicht-oxidierte Suspension aus Braunkohlepartikeln und wässriger Ammoniaklösung, zugeführt wird, braucht die Oxidationsgaszufuhr im erfindungsgemäßen Verfahren nicht geschlossen zu werden, und die Oxidationsreaktion kann kontinuierlich ohne Reaktionsabbruch durchgeführt werden.

Ergänzend kann der Reaktor mit einem oder mehreren Rührvorrichtungen ausgestattet sein, welche die Suspension aus Braunkohlepartikeln und wässriger Ammoniaklösung während der Begasung weiter durchmischen, was den Fortschritt der Oxidationsreaktion begünstigt und Sedimentation vermeidet.

Die oxidierte Produktsuspension wird z.B. über einen Vorlagebehälter dem Reaktor kontinuierlich entnommen. Der Vorlagebehälter steht unter Normaldruck. Zur Vermeidung von Sedimentation ist der Rezirkulationsbehälter vorzugsweise mit weiteren Rührern ausgestattet. Bei diesen Rührern kann es sich auch um Begasungsrührwerke handeln, welche den Zusatz weiterer Gase, beispielsweise CO₂ ermöglichen.

Die aus Schritt b) erhaltene Produktsuspension kann vollständig Schritt c) zugeführt werden. Alternativ kann die Produktsuspension auch teilweise nochmal Schritt a), wo sie mit den Ausgangsstoffen Braunkohlepartikel und wässriger Ammoniaklösung vermischt wird, und teilweise Schritt c) zugeführt werden. In einer bevorzugten Ausführungsform wird dieser Schritt b) abgezogene Produktsuspension vollständig Schritt c) zugeführt. Die teilweise Rückführung der Produktsuspension zu Schritt a) ist nicht bevorzugt.

Bei Schritt c) handelt es sich um einen Trocknungsschritt. Die Trocknung wird bei einer Temperatur von >50°C, vorzugsweise >60°C, insbesondere bevorzugt >70°C durchgeführt, wobei die Höchsttemperatur vorzugsweise 120°C beträgt.

Die mittlere Verweilzeit für die Trocknung liegt in der Regel unter 20 Stunden, bevorzugt unter 10 Stunden, stärker bevorzugt unter 8 Stunden.

Die Trocknung kann unter Normaldruck oder vermindertem Druck erfolgen, wobei die Trocknung vorzugsweise unter Normaldruck erfolgt. Eine mehrstufige Trocknung bei verschiedenen Drücken in verschiedenen Stufen ist selbstverständlich auch möglich.

Während der Trocknung entsteht ein Produkt, welches einen Restfeuchtegehalt von maximal 30 Gew.-%, bezogen auf das Gesamtgewicht des getrockneten Produktes, aufweist. Vorzugsweise weist das getrocknete Produkt eine Restfeuchtegehalt von 25 Gew.-%, bezogen auf das Gesamtgewicht des getrockneten Produkts, auf, und insbesondere bevorzugt ist ein Restfeuchtegehalt von maximal 20 Gew.-%, bezogen auf das Gesamtgewicht des getrockneten Produktes.

Der während der Trocknung entstehende Brüden aus Ammoniak und Wasserdampf wird vorzugsweise mittels Destillation aufgereinigt, wobei gereinigtes Wasser und Ammoniak erhalten werden, die zur Herstellung einer wässrigen Ammoniaklösung verwendet werden können, die dem Verfahren, insbesondere Schritt a) wieder zugeführt werden kann. Dies trägt zur Wirtschaftlichkeit des Verfahrens bei.

Durch Einstellung der Trocknungsdauer und der Trocknungstemperatur während der Trocknung können die Produkteigenschaften hinsichtlich der Stickstoffbindungsverhältnisse modifiziert werden.

In einer bevorzugten Ausführungsform erfolgt die Trocknung der Produktsuspension in einem Kombifluidtrockner. Durch Einstellung der Drehzahl des Kombifluidtrockners können die Produkteigenschaften hinsichtlich der Stickstoffbindungsverhältnisse weiter modifiziert werden.

Weiterhin ist es möglich, während des Trocknungsvorgangs in Schritt c) und/oder in Schritt d) gezielte Dotierungen der Produktsuspension mit Makro-, Mikronährstoffen, Bakterien, Pilzen und Wasserspeichern auf mineralischer oder synthetischer Basis, wie beispielsweise Bentonit, durchzuführen und so die Produkteigenschaften zu beeinflussen.

Makro- und Mikronährstoffe in Bezug auf Pflanzennährstoffe sind allgemein bekannte Fachbegriffe und z.B. in Fiedler, H J und Reissig, H: "Lehrbuch der Bodenkunde", Gustav Fischer Verlag Jena, 1964, S. 234 unter "Pflanzennährstoffe des Bodens" näher beschrieben. Somit handelt es sich bei Makronährstoffen, auch Makroelemente oder Hauptnährelemente genannt, um Nährstoffe, die am Aufbau der Körpersubstanz der Pflanzen beteiligt sind und dabei den größten Massenanteil ausmachen. Zu den Makronährstoffen zählen unter anderem Stickstoff (N), Phosphor (P) und Kalium (K). Unter Mikronährstoffe, auch Mikroelemente oder Spurenelemente genannt, sind vorliegend chemische Elemente zu verstehen, die hinsichtlich pflanzlicher Ernährung und Stoffwechsel essentiell sind, die aber im Gegensatz zu Makronährstoffen nur in geringen Mengen benötigt werden, wie beispielsweise Eisen (Fe), Mangan (Mn) oder Bor (B).

Optional kann im Trocknungsschritt c) auch ein Agglomerierungsmittel zugesetzt werden. Das Agglomerierungsmittel sorgt dafür, dass das Produkt während der Trocknung agglomeriert und ein feinkörniges, staubfreies Produkt entsteht. Ein derartiges Produkt ist für die Anwendung als Düngemittel besonders vorteilhaft.

Im letzten Schritt des erfindungsgemäßen Verfahrens, also in Schritt d), wird das in Schritt c) erhaltene Produkt abgekühlt. Vorzugsweise erfolgt die Abkühlung des Produktes in Schritt d) in einer rotierenden Trommel. Diese hat beispielsweise einen Durchmesser im Bereich von 0,5 bis 1,5 m und eine Länge von 2 bis 5 m und rotiert mit einer Geschwindigkeit von bis zu 20 U/min.

Optional kann auch während des Abkühlens in Schritt d) ein Agglomerierungsmittel zugesetzt werden, welches die Produkteigenschaften hinsichtlich Körnung weiter beeinflusst. Hierdurch kann auch die mechanische Stabilität des Produkts erhöht werden. Bevorzugt wird deshalb ein Agglomerierungsmittel in Schritt c) und zusätzlich auch in Schritt d) zugesetzt.

Vorzugsweise erfolgt die Abkühlung des getrockneten Produkts auf eine Temperatur von unter 50°C, insbesondere bevorzugt auf Raumtemperatur (20 bis 30°C). Die Dauer der Abkühlung beträgt üblicherweise 10 bis 240 min, vorzugsweise 20 bis 180 min, insbesondere bevorzugt 30 bis 120 min.

Die mittlere Verweilzeit im System (in welchem die Verfahrensschritte a) bis d) durchgeführt werden) kann variabel gesteuert werden. Ausgehend von der Vermischung der Ausgangsprodukte Braunkohle und wässrige Ammoniaklösung in Schritt a) bis zum Erhalt des getrockneten und abgekühlten Produkts in Schritt d) beträgt die mittlere Verweilzeit üblicherweise 90 min bis 30 h, vorzugsweise 2 bis 24 h, insbesondere bevorzugt 3 bis 12 h.

Zudem kann die mittlere Verweilzeit in jedem Schritt variabel gesteuert werden, was eine gezielte Einflussnahme auf die Produkteigenschaften hinsichtlich Gesamtstickstoffgehalt, Stickstoffbindungsverhältnisse und Dotierung ermöglicht.

Weiterhin ist in jedem Schritt des erfindungsgemäßen Verfahrens die Zufuhr weiterer Gase, beispielsweise CO₂ zur Beeinflussung der Stickstoffbindungsverhältnisse im Produkt, möglich.

Insgesamt ermöglicht das erfindungsgemäße Verfahren somit eine gezielte Steuerung der Verfahrensschritte was Durchsatz der Ausgangsstoffe und Energiebedarf betrifft, sowie damit einhergehend eine gezielte Steuerung der Produkteigenschaften.

Die mit dem erfindungsgemäßen Verfahren hergestellten Produkte (organische Düngemittel mit Huminstoffcharakter) weisen einen Stickstoffgehalt von bis zu 8 Gew.-%, bezogen auf das Trockengewicht des Düngemittels, und ein C/N-Verhältnis von 7 bis 15, bevorzugt 8 bis 15, stärker bevorzugt 9 bis 15 auf. Vorzugsweise beträgt der Stickstoffgehalt der mit dem erfindungsgemäßen Verfahren hergestellten Produkte mindestens 4 Gew.-%, stärker bevorzugt mindestens 5 Gew.-% und insbesondere bevorzugt mindestens 6 Gew.-%, jeweils bezogen auf das Trockengewicht des Düngemittels auf.

Der Stickstoff liegt in dem Produkt in verschiedenartigen chemischen Bindungsformen vor. Ein Teil des Stickstoffs liegt in der Ammoniumform gebunden vor, welche kurzfristig pflanzenverfügbar ist (10 bis 41 Gew.-%, bezogen auf den Gesamtgehalt an Stickstoff des Produkts). Ein weiterer Teil liegt gebunden in fest organisch gebundenen Bindungsformen vor, welche eine langfristige Pflanzenverfügbarkeit aufweisen (4 bis 73 Gew.-%, bezogen auf den Gesamtgehalt an Stickstoff des Produkts). Ein weiterer Teil liegt in der Amidform vor, welche mittelfristig pflanzenverfügbar ist (14 bis 21 Gew.-%, bezogen auf den Gesamtgehalt an Stickstoff des Produkts).

Die chemischen Bindungsformen unterscheiden sich hinsichtlich ihrer Hydrolysierbarkeit. Der in der Ammoniumform gebundene Stickstoff ist mit in Wasser suspendiertem MgO leicht als Ammoniak abzuspalten, während die organischen Bindungsformen schwerer hydrolysierbar sind. Der Teil, der in der Amidform vorliegt, kann auf normale Weise mit verdünnter Natronlauge unter den Bedingungen der Wasserdampfdestillation hydrolysiert werden. Der unter diesen experimentellen Bedingungen nicht hydrolysierbare Anteil stellt den festen, organisch gebundenen Stickstoff dar.

### Ausführungsbeispiel

Aus einem Vorlagebehälter werden kontinuierlich 100 kg/h Braunkohlestaub entnommen und einer Dispergiervorrichtung (Modell Ytron ZC), die Teil eines Kreislaufsystems ist, das weiterhin aus einem Rezirkulationsbehälter sowie einer Zirkulationspumpe besteht, zugeführt.

Über den Rezirkulationsbehälter wird kontinuierlich eine wässrige, 5%ige Ammoniaklösung in das Kreislaufsystem eingespeist, sodass eine Mischung aus 20 Gew.-% Braunkohlestaub und 80 Gew.-% Ammoniaklösung, bezogen auf das Gesamtgewicht der Mischung, entsteht. Die Mischung wird für eine mittlere Verweilzeit von 180 min durch das Kreislaufsystem gepumpt, wobei eine intensive Durchmischung und Zerkleinerung der Braunkohlepartikel erfolgt.

Die resultierende Braunkohle-Suspension wird kontinuierlich aus dem Rezirkulationsbehälter ausgekreist und dem Oxidationsreaktor zugeführt.

Der Oxidationsreaktor besteht aus einem Behälter mit einem Nutzvolumen von 2,5 m³ und umfasst weiterhin ein Begasungsrührwerk. In dieser Anordnung wird die Braunkohle-Suspension für eine mittlere Verweilzeit von 120 min bei 0,3 MPa (3 bar) und einer Temperatur von 70°C unter Rühren mit Druckluft begast. Die oxidierte Produktsuspension wird kontinuierlich über einen Vorlagebehälter aus dem Reaktor ausgekreist, wobei der Vorlagebehälter unter Normaldruck steht

Aus dem Vorlagebehälter wird die Produktsuspension kontinuierlich in einen Kombifluidtrockner überführt und bei einer mittleren Temperatur von 100°C über eine mittlere Verweilzeit von 10 h auf eine Restfeuchte von 25 Gew.-%, bezogen auf das Gesamtgewicht des getrockneten Produktes, getrocknet. Die mittlere Verweilzeit ergibt sich aus dem Volumen des Trockners (3000 I) und der Entnahmemenge des getrockneten Produkts (300 l/h). Der dabei entstehende Brüden wird mittels Wäsche und Destillation aufgereinigt. Die daraus hervorgehende wässrige Ammoniaklösung wird in den Prozess rückgeführt. Während der Trocknung wird dem Produkt ein Agglomerierungsmittel zur Erzeugung eines Agglomerats zugesetzt.

Nach der Trocknung wird das agglomerierte Produkt in einer langsam laufenden Trommel abgekühlt und kann dabei bei Bedarf durch Zugabe von weiterem Agglomerierungsmittel weiter agglomeriert werden. Die Produkttemperatur liegt dann bei Raumtemperatur (20 bis 30°C).

Die Stickstoffausbeute des so erhaltenen Produkts wurde analytisch bestimmt.

### Elementaranalyse:

C: 58,8 %,
H: 5,1 %,
N: 5,5 %,
S: 0,7 %.

Bindungsformen des Stickstoffs (in Gew.-%, bezogen auf den Gesamtstickstoffgehalt):
Ammonium-N: 32,7 Gew.-%,
organisch gebunden: 54,5 Gew.-%,
Amid-N: 12,7 Gew.-%.

## Patentansprüche

1. Verfahren zur Herstellung eines organischen Düngemittels mit Huminstoffcharakter durch oxidierende und ammonisierende Behandlung von Braunkohle, wobei das organische Düngemittel einen Stickstoffgehalt von bis zu 8 Gew.-%, bezogen auf das Trockengewicht des Düngemittels, und ein C/N-Verhältnis von 7 bis 15 aufweist,
**dadurch gekennzeichnet, dass**
das Verfahren als kontinuierliches Verfahren durchgeführt wird und die folgenden Schritte umfasst:
a) Zuführen von Braunkohlepartikeln und wässriger Ammoniaklösung sowie gegebenenfalls rückgeführtes Produkt von Schritt b) als Ausgangsstoffe in einen Dispergierkreislauf mit Dispergiervorrichtung, Rezirkulationsbehälter und Zirkulationspumpe, und Dispergieren der Ausgangsstoffe unter gleichzeitiger Zerkleinerung der Braunkohlepartikel bis eine Suspension aus Braunkohlepartikeln und wässriger Ammoniaklösung entsteht, welche dem Dispergierkreislauf entnommen und Schritt b) zugeführt wird;
b) Oxidieren der in Schritt a) erhaltenen Suspension in einem Oxidationsreaktor mit einem sauerstoffhaltigem Oxidationsmittel bei einer Temperatur von <100°C, wobei eine Produktsuspension entsteht, welche vollständig Schritt c) oder teilweise Schritt c) und teilweise Schritt a) als Ausgangsstoff zugeführt wird;
c) Trocknen der in Schritt b) erhaltenen Produktsuspension bei einer Temperatur >50°C bis auf einen Restfeuchtegehalt von maximal 30 Gew.-%, bezogen auf das Gesamtgewicht des getrockneten Produkts;
d) Abkühlen des in Schritt c) erhaltenen getrockneten Produkts.

2. Verfahren nach Anspruch 1, wobei in Schritt a) Braunkohlepartikel mit Partikelgrößen >10 µm eingesetzt werden, welche in der Dispergiervorrichtung auf Partikelgrößen von ≤10 µm zerkleinert werden.

3. Verfahren nach einem der vorherigen Ansprüche, wobei die Konzentration der in Schritt a) verwendeten wässrigen Ammoniaklösung bis zu 10 Gew.-%, bezogen auf das Gesamtgewicht der wässrigen Ammoniaklösung, beträgt.

4. Verfahren nach einem der vorherigen Ansprüche, wobei in Schritt a) bis zu 30 Gew.-% Braunkohlepartikel auf 70 Gew.-% der wässrigen Ammoniaklösung eingesetzt werden, jeweils bezogen auf das Gesamtgewicht der Mischung aus Braunkohlepartikeln und wässriger Ammoniaklösung.

5. Verfahren nach einem der vorherigen Ansprüche, wobei die mittlere Verweilzeit der Mischung aus Braunkohlepartikeln und wässriger Ammoniaklösung in der Dispergiervorrichtung des Schritts a) 30 bis 300 min beträgt.

6. Verfahren nach einem der vorherigen Ansprüche, wobei der Suspension aus Braunkohlepartikeln und wässriger Ammoniaklösung in Schritt a) zusätzlich ein sauerstoffhaltiges Oxidationsmittel zugeführt wird, welches ausgewählt wird aus Sauerstoff, Sauerstoff-angereicherter Luft, Luft, Ozon oder Wasserstoffperoxid.

7. Verfahren nach einem der vorherigen Ansprüche, wobei es sich bei dem in Schritt b) verwendeten sauerstoffhaltigen Oxidationsmittel um ein Sauerstoff(O₂)-haltiges Gas, welches ausgewählt wird aus Sauerstoff, Sauerstoff-angereicherter Luft oder Luft, oder um Ozon oder Wasserstoffperoxid, handelt.

8. Verfahren nach Anspruch 7, wobei es sich bei dem in Schritt b) verwendeten sauerstoffhaltigen Oxidationsmittel um ein Sauerstoff(O₂)-haltiges Gas oder Ozon handelt, welches der Suspension bei einem Überdruck von bis zu 0,8 MPa mittels einer Gasdosierungsvorrichtung zugeführt wird.

9. Verfahren nach einem der vorherigen Ansprüche, wobei die mittlere Verweilzeit der in Schritt a) erhaltenen Suspension im Oxidationsreaktor 15 bis 300 min beträgt.

10. Verfahren nach einem der vorherigen Ansprüche, wobei der Oxidationsreaktor mit einer weiteren Dispergiervorrichtung verknüpft ist.

11. Verfahren nach einem der vorherigen Ansprüche, wobei der Oxidationsreaktor bei Überdruck von bis zu 0,7 MPa arbeitet.

12. Verfahren nach einem der vorherigen Ansprüche, wobei die in Schritt b) erhaltene Produktsuspension vollständig Schritt c) zugeführt wird.

13. Verfahren nach einem der vorherigen Ansprüche, wobei der in Schritt c) entstehende Brüden aus Ammoniak und Wasserdampf mittels Destillation aufgereinigt wird.

14. Verfahren nach einem der vorherigen Ansprüche, wobei in Schritt c) und/oder in Schritt d) ein Agglomerierungsmittel zugesetzt wird.

15. Verfahren nach einem der vorherigen Ansprüche, wobei die Produktsuspension während der Trocknung in Schritt c) und/oder in Schritt d) mit Makro-, Mikronährstoffen, Bakterien, Pilzen oder Wasserspeichern dotiert wird.

16. Verfahren nach einem der vorherigen Ansprüche, wobei die Trocknung der Produktsuspension in Schritt c) in einem Kombifluidtrockner erfolgt und/oder die Abkühlung des getrockneten Produkts in Schritt d) in einer rotierenden Trommel erfolgt.

## Claims

1. A method for producing an organic fertilizer with humic substance properties by oxidizing and ammonifying lignite, wherein the organic fertilizer has a nitrogen content of up to 8 wt.%, based on the dry weight of the fertilizer, and a C/N ratio of 7 to 15,
**characterized in that**
the method is carried out as a continuous method and comprises the following steps:
a) feeding lignite particles and aqueous ammonia solution as well as optionally recovered product of step b) as starting materials into a dispersing circuit having a dispersing device, a recirculation container, and a circulation pump, and dispersing the starting materials while simultaneously reducing the lignite particles in size until a suspension of lignite particles and aqueous ammonia solution is formed that is taken out of the dispersing circuit and transferred to step b);
b) oxidizing the suspension obtained in step a) in an oxidation reactor with an oxygen-containing oxidizing agent at a temperature of <100 °C, thereby forming a product suspension that is completely transferred to step c) or partially to step c) and partially to step a) as starting material;
c) drying the product suspension obtained in step b) at a temperature of >50 °C up to a residual moisture content of at most 30 wt.%, based on the total weight of the dried product;
d) cooling the dried product obtained in step c).

2. The method according to claim 1, wherein in step a) lignite particles with particle sizes >10 µm are employed that are reduced in size in the dispersing device to particle sizes of ≤ 10 µm.

3. The method according to any of the preceding claims, wherein the concentration of the aqueous ammonia solution used in step a) is up to 10 wt.%, based on the total weight of the aqueous ammonia solution.

4. The method according to any of the preceding claims, wherein in step a) up to 30 wt.% of lignite particles to 70 wt.% of the aqueous ammonia solution are employed, each based on the total weight of the mixture of lignite particles and aqueous ammonia solution.

5. The method according to any of the preceding claims, wherein the mean retention time of the mixture of lignite particles and aqueous ammonia solution in the dispersing device of step a) is 30 to 300 min.

6. The method according to any of the preceding claims, wherein in step a) additionally an oxygen-containing oxidizing agent is fed to the suspension of lignite particles and aqueous ammonia solution that is selected from oxygen, oxygen-enriched air, air, ozone, or hydrogen peroxide.

7. The method according to any of the preceding claims, wherein the oxygen-containing oxidizing agent used in step b) is an oxygen(O₂)-containing gas that is selected from oxygen, oxygen-enriched air, or air or ozone or hydrogen peroxide.

8. The method according to claim 7, wherein the oxygen-containing oxidizing agent used in step b) is an oxygen(O₂)-containing gas or ozone that is fed to the suspension at an excess pressure of up to 0,8 MPa by means of a gas metering device.

9. The method according to any of the preceding claims, wherein the mean retention time of the suspension obtained in step a) in the oxidation reactor is 15 to 300 min.

10. The method according to any of the preceding claims, wherein the oxidation reactor is connected to a further dispersing device.

11. The method according to any of the preceding claims, wherein the oxidation reactor runs at an excess pressure of up to 0,7 MPa.

12. The method according to any of the preceding claims, wherein the product suspension obtained in step b) is completely fed to step c).

13. The method according to any of the preceding claims, wherein the exhaust steam of ammonia and water vapor formed in step c) is purified by means of distillation.

14. The method according to any of the preceding claims, wherein an agglomerating agent is added in step c) and/or in step d).

15. The method according to any of the preceding claims, wherein the product suspension is doped with macro- and micronutrients, bacteria, fungi, or water reservoirs during drying in step c) and/or in step d).

16. The method according to any of the preceding claims, wherein drying of the product suspension in step c) is performed in a combined fluid dryer and/or cooling of the dried product in step d) is performed in a rotary drum.

## Revendications

1. Procédé de fabrication d'un engrais organique à caractère humique par traitement oxydant et ammonisant du lignite, l'engrais organique ayant une teneur en azote allant jusqu'à 8 % en poids, par rapport au poids à l'état sec de l'engrais, et un rapport C/N de 7 bis 15,
**caractérisé en ce que**
le procédé est mis en œuvre en tant que procédé continu et comprend les étapes suivantes :
a) introduction de particules de lignite et de solution aqueuse d'ammoniac, et éventuellement d'un produit recyclé de l'étape b), comme matières premières dans un circuit de dispersion comprenant un dispositif de dispersion, une cuve de recirculation et une pompe de circulation, et dispersion des matières premières avec broyage simultané des particules de lignite jusqu'à ce qu'une suspension de particules de lignite et de solution aqueuse d'ammoniac soit formée, qui est extraite du circuit de dispersion et introduite dans l'étape b);
b) oxydation de la suspension obtenue à l'étape a) dans un réacteur d'oxydation avec un agent oxydant contenant de l'oxygène à une température de <100°C, dans laquelle une suspension de produit est formée qui est alimentée en totalité à l'étape c), ou en partie à l'étape c) et en partie à l'étape a), comme matière première;
c) séchage de la suspension de produit obtenue à l'étape b) à une température de >50°C jusqu'à une humidité résiduelle d'au plus 30 % en poids, par rapport au poids total du produit séché;
d) refroidissement du produit séché obtenu à l'étape c).

2. Procédé selon la revendication 1, dans lequel à l'étape a), on utilise des particules de lignite avec des tailles de particules > 10 µm, qui sont broyées dans le dispositif de dispersion jusqu'à des tailles de particules ≤ 10 µm.

3. Procédé selon l'une des revendications précédentes, dans lequel la concentration de la solution aqueuse d'ammoniaque utilisée à l'étape a) va jusqu'à 10 % en poids, par rapport au poids total de la solution aqueuse d'ammoniaque.

4. Procédé selon l'une des revendications précédentes, dans lequel à l'étape a), jusqu'à 30 % en poids de particules de lignite sont utilisées pour 70 % en poids de la solution aqueuse d'ammoniaque, chaque fois par rapport au poids total du mélange de particules de lignite et de solution aqueuse d'ammoniaque.

5. Procédé selon l'une des revendications précédentes, dans lequel le temps de séjour moyen du mélange de particules de lignite et de solution aqueuse d'ammoniaque dans le dispositif de dispersion de l'étape a) est de 30 bis 300 min.

6. Procédé selon l'une des revendications précédentes, dans lequel la suspension de particules de lignite et de solution aqueuse d'ammoniaque est en outre alimentée à l'étape a) avec un agent oxydant contenant de l'oxygène, qui est choisi parmi l'oxygène, l'air enrichi en oxygène, l'air, l'ozone ou le peroxyde d'hydrogène.

7. Procédé selon l'une des revendications précédentes, dans lequel l'oxydant contenant de l'oxygène utilisé à l'étape b) est un gaz contenant de l'oxygène (O₂) qui est choisi parmi l'oxygène, l'air enrichi en oxygène ou l'air, ou l'ozone ou le peroxyde d'hydrogène.

8. Procédé selon la revendication 7, dans lequel l'oxydant contenant de l'oxygène utilisé à l'étape b) est un gaz contenant de l'oxygène (O₂) ou de l'ozone, qui est introduit dans la suspension à une surpression allant jusqu'à 0,8 MPa au moyen d'un appareil de dosage du gaz.

9. Procédé selon l'une des revendications précédentes, dans lequel le temps de séjour moyen de la suspension obtenue à l'étape a) dans le réacteur d'oxydation est de 15 bis 300 min.

10. Procédé selon l'une des revendications précédentes, dans lequel le réacteur d'oxydation est relié à un autre dispositif de dispersion.

11. Procédé selon l'une des revendications précédentes, dans lequel le réacteur d'oxydation fonctionne à une surpression allant jusqu'à 0,7 MPa.

12. Procédé selon l'une des revendications précédentes, dans lequel la suspension de produit obtenue à l'étape b) est introduite dans l'étape c) en totalité.

13. Procédé selon l'une des revendications précédentes, dans lequel la vapeur consistant de l'ammoniac et de la vapeur d'eau formée à l'étape c) est purifiée par distillation.

14. Procédé selon l'une des revendications précédentes, dans lequel un agent agglomérant est ajouté à l'étape c) et/ou à l'étape d).

15. Procédé selon l'une des revendications précédentes, dans lequel la suspension de produit est dopée en macro-, micronutriments, bactéries, champignons ou réservoirs d'eau lors du séchage à l'étape c) et/ou à l'étape d).

16. Procédé selon l'une des revendications précédentes, dans lequel le séchage de la suspension de produit à l'étape c) a lieu dans un séchoir à fluide combiné, et/ou le refroidissement du produit séché à l'étape d) a lieu dans un tambour rotatif.
